# EUROPÄISCHE PATENTSCHRIFT

(11) **EP 0 793 002 B1**
(45) Veröffentlichungstag und Bekanntmachung des Hinweises auf die Patenterteilung: **27.09.2000**
(21) Anmeldenummer: 97101797.5
(22) Anmeldetag: 05.02.1997
(51) Int. Cl.: F01L 1/02, F16H 7/08

(54) **Kettentrieb-Einheit für den Nockenwellen-Antrieb einer Brennkraftmaschine**
Preassembled cam shaft chain drive arrangement for an internal combustion engine
Dispositif préassemblé d'entraînement par chaîne d'arbre à cames de moteur à combustion interne

(30) Priorität: 01.03.1996 DE 19607819
(43) Veröffentlichungstag der Anmeldung: 03.09.1997
(73) Patentinhaber: Bayerische Motoren Werke Aktiengesellschaft, 80788 München (DE)
(72) Erfinder: Hörl-Liegl, Albert, 85570 Ottenhofen (DE); Flierl, Rudolph, Dr., 81669 München (DE)

(56) Entgegenhaltungen:
- EP-A- 0 055 162
- EP-A- 0 656 464
- FR-A- 2 644 514

## Beschreibung

Die Erfindung betrifft eine Kettentrieb-Einheit für den Nockenwellen-Antrieb einer Brennkraftmaschine, mit einem Antriebsritzel, einer Kette, zumindest einem Abtriebsrad sowie einer Führungsschiene und einer Spannschiene, die als vormontierte Einheit in einen Kettenschacht eines Brennkraftmaschinen-Kurbelgehäuses einsetzbar ist. Zum bekannten Stand der Technik wird auf die DE 40 25 126 A1 sowie auf die EP 0 656 464 A1 verwiesen.

Aus der erstgenannten Schrift ist es bekannt, beispielsweise den Kettentrieb für den Nockenwellen-Antrieb einer Brennkraftmaschine mittels eines Montageträgers als vormontierte Einheit an die Brennkraftmaschine heranzuführen und danach an dieser zu fixieren. Anschließend wird der Montageträger entfernt. Bei der in der zweitgenannten Schrift beschriebenen Ausführungsform stellt eine Grundplatte, auf der eine Ketten-Führungsschiene sowie eine Ketten-Spannschiene angeordnet sind, quasi diesen Montageträger dar, wobei diese Grundplatte jedoch an der Brennkraftmaschine verbleibt, d. h. wesentliches Bestandteil des Kettentriebes ist und mit der Führungsschiene sowie der Spannschiene am Kurbelgehäuse verschraubt wird.

Da die erste Ausführungsform hinsichtlich der Handhabung aufwendig ist, während die zweite Ausführungsform unverhältnismäßig viele Bauteile benötigt, ist es Aufgabe der Erfindung, eine demgegenüber verbesserte Kettentrieb-Einheit nach dem Oberbegriff des Anspruchs 1 aufzuzeigen. Zur Lösung dieser Aufgabe ist vorgesehen, daß die Spannschiene und die Führungsschiene relativ zueinander bewegbar ineinander geführt sind. Vorteilhafte Aus- und Weiterbildungen sind Inhalt der Unteransprüche.

Erfindungsgemäß ist kein separater Montageträger oder dgl. erforderlich, der nach erfolgter Montage wieder entfernt werden müßte oder der - wie die oben zitierte Grundplatte - als zusätzliches Bauteil am Kurbelgehäuse der Brennkraftmaschine fixiert werden muß -, wenn die Spannschiene und die Führungsschiene der Kettentriebeinheit ineinander geführt sind. Spannschiene und Führungsschiene übernehmen somit quasi die Funktion des Montageträgers. Damit die Spannschiene jedoch ihrer hauptsächlichen Funktion, nämlich der Spannung des Kettentriebes, gerecht werden kann, ist eine gewisse relative Beweglichkeit zur Führungsschiene erforderlich. Dabei kann die Montage der Kettentrieb-Einheit an der Brennkraftmaschine derart vonstatten gehen, daß zunächst an einem Hilfsgestell das Abtriebsrad sowie die Spannschiene und die Führungsschiene aufgesteckt wird, daß hiernach die Kette und das Antriebsritzel aufgelegt wird und daß anschließend ein Handhabungsautomat, vorzugsweise ein Roboter, das Abtriebsrad sowie beispielsweise die Führungsschiene an geeigneten Stellen ergreift und in den Kettenschacht des Brennkraftmaschinen-Kurbelgehäuses einsetzt. Anschließend daran können Abtriebsrad, Antriebsritzel und vorzugsweise die Führungsschiene am Kurbelgehäuse fixiert, beispielsweise verschraubt oder sonstwie festgelegt werden. Die Fixierung/Festlegung der Führungsschiene kann dabei bevorzugt derart erfolgen, daß eine geringfügige Verschiebbarkeit in Achsrichtung von Antriebsritzel und Abtriebsrad gegeben ist. In dieser Achsrichtung wird die Führungsschiene und somit auch die von ihr geführte Spannschiene sodann durch die Kette selbsttätig positioniert, wie dies grundsätzlich aus der DE 34 17 099 C2 bekannt ist. Es soll noch darauf hingewiesen werden, daß selbstverständlich auch mehrere Abtriebsräder, welche im übrigen Nockenwellen-Verstelleinheiten tragen können, vorgesehen sein können; ebenso kann auch das Antriebsritzel eine Zusatzeinheit, beispielsweise für den Antrieb der Brennkraftmaschinen-Ölpumpe, aufweisen.

Zur Vereinfachung der Montage kann eine einzige Fixierung bzw. Festlegung der Einheit aus Führungsschiene und Spannschiene ausreichend sein, wenn die Führungsschiene zusätzlich in eine Nase, beispielsweise am Kurbelgehäuse oder auch am Zylinderkopf der Brennkraftmaschine - bevorzugt ebenfalls wieder unter geringfügiger Verschiebbarkeit in Achsrichtung von Antriebsritzel und Abtriebsrad - einhängbar ist, oder wenn eine oder mehrere Anlageflächen für die Führungsschiene an der Brennkraftmaschine vorgesehen sind.

Verbunden sein kann die Spannschiene mit der Führungsschiene über zumindest einen in eine Führungsnut oder in eine entsprechende Aussparung eingreifenden sog. Bolzenabschnitt. Dabei kann zumindest ein an der Spannschiene vorgesehener, sich in Achsrichtung des Antriebsritzels erstreckender Bolzenabschnitt in eine entsprechende Führungsnut oder Aussparung in der Führungsschiene eingreifen, wobei diese Führungsnut oder Aussparung derart gestaltet ist, daß die Spannschiene in ausreichender Weise gegenüber der Führungsschiene bewegbar ist. Die Relativbewegungen der Spannschiene, die diese beim Spannen des Kettentriebes ausführt, werden somit durch die Führungsnut oder Aussparung ermöglicht, zugleich aber auch begrenzt. Beispielsweise kann die Spannschiene gegenüber der Führungsschiene verschwenkbar oder verdrehbar sein, dann hat die Führungsnut die Form eines Kreisbogen-Segmentes. Im Zusammenhang mit einer derartigen Verschwenkbarkeit ist es besonders vorteilhaft, wenn die Spannschiene und die Führungsschiene gegeneinander verdrehbar über eine gemeinsame Festlegung an der Brennkraftmaschine fixiert, so z. B. gemeinsam auf einem Stift aufgesteckt wird. Alternativ kann jedoch die Spannschiene auch translatorisch gegenüber der Führungsschiene verschiebbar sein, wenn die Verbindung dieser beiden Elemente über zumindest zwei jeweils in eine Führungsnut eingreifende Bolzenabschnitte, die in verschiedenen Ebenen liegen, erfolgt.

Näher erläutert wird die Erfindung anhand zweier bevorzugter Ausführungsbeispiele, dabei zeigt
- Fig. 1a: die Aufsicht auf eine erste Ausführungsform und
- Fig. 1b: den Schnitt A-A aus Fig. 1a, sowie
- Fig. 2a: die Aufsicht auf eine zweite Ausführungsform, sowie
- Fig. 2b: den Schnitt A-A aus Fig. 2a, sowie
- Fig. 2c: den Schnitt B-B aus Fig. 2a.

Mit der Bezugsziffer 1 ist ein lediglich schematisch dargestelltes Brennkraftmaschinen-Kurbelgehäuse bezeichnet, das einen Kettenschacht 2 für den als Kettentrieb ausgebildeten Nockenwellen-Antrieb aufweist. An die Stirnseiten der beiden nicht gezeigten Nockenwellen ist jetzt jeweils ein Abtriebsrad 3 dieses Kettentriebes angeschraubt, während der Antrieb wie üblich über ein an der ebenfalls nicht gezeigten Kurbelwelle angeflanschtes Antriebsritzel 4 erfolgt. Neben der Kette 5 sind weitere Elemente des Kettentriebes eine Führungsschiene 6 sowie eine Spannschiene 7, die sich im wesentlichen vollständig innerhalb des Kettenschachtes 2 befinden. Auf die Spannschiene 7 wirkt ein an einer geeigneten Stelle allgemein an der Brennkraftmaschine, hier am Kurbelgehäuse 1 befestigter Kettenspanner 8 ein.

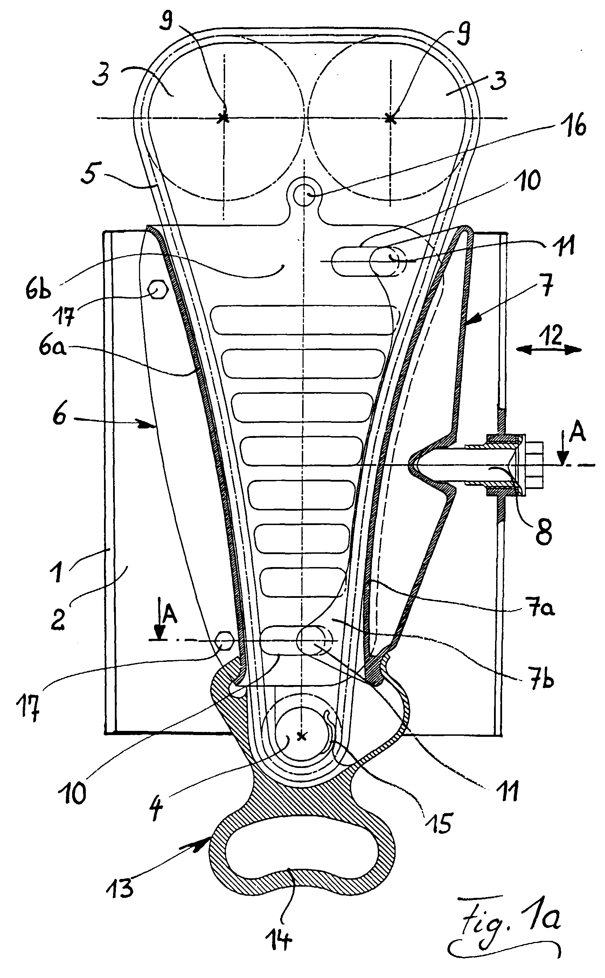

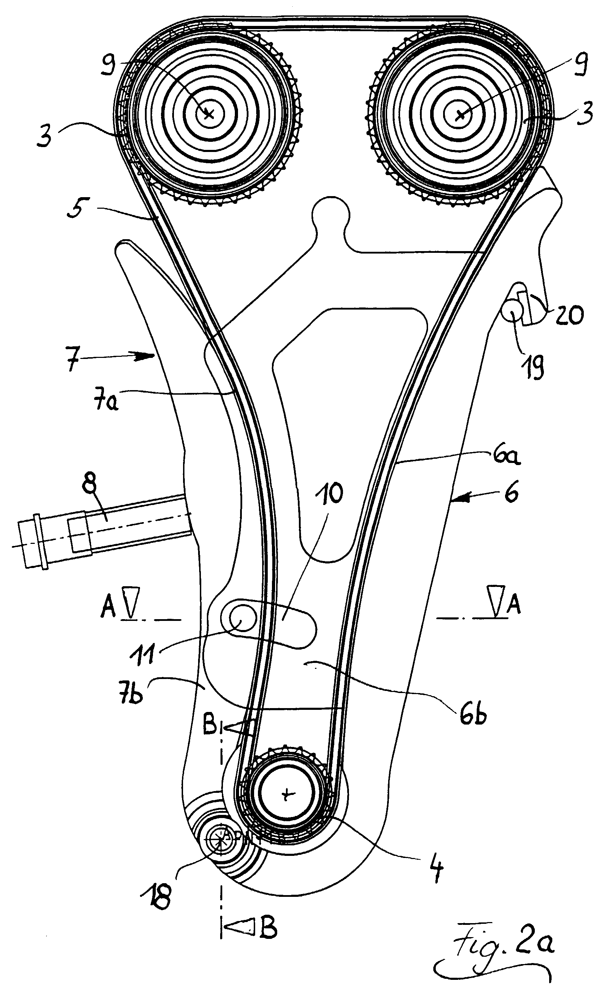

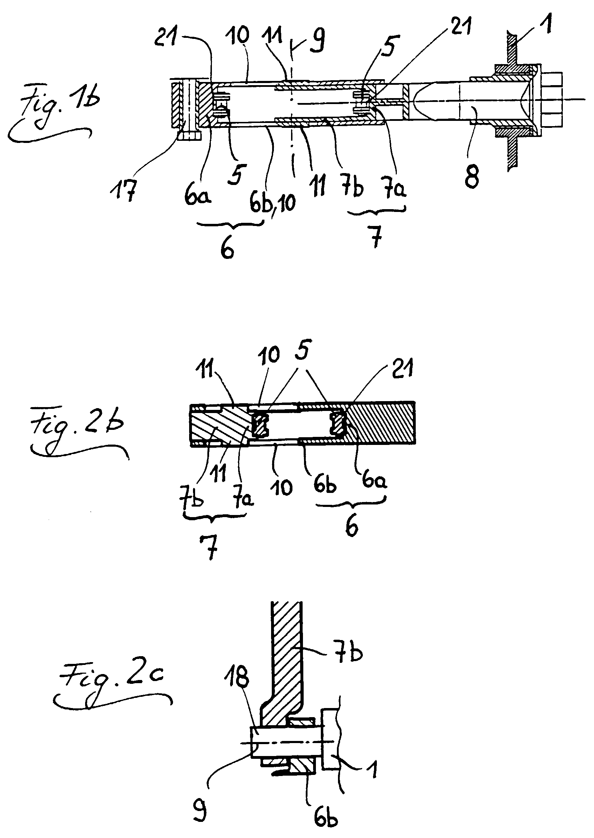

Beim Ausführungsbeispiel nach den Fig. 1a, 1b weist die Führungsschiene 6 neben dem eigentlichen Schienenabschnitt 6a zwei plattenförmige Fortsätze 6b auf, die parallel zur Stirnseite des Kurbelgehäuses 1 ausgerichtet sind und somit senkrecht zur Achsrichtung 9 von Abtriebsrad 3 bzw. Antriebsritzel 4 - diese Achsrichtung 9 erstreckt sich in den Fig. 1a, 2a senkrecht zur Zeichenebene - liegen. Wie Fig. 1b zeigt, sind die beiden Fortsätze 6b an die Vorderseite sowie an die Hinterseite des eigentlichen Schienenabschnittes 6a angebunden. In diesen plattenförmigen Fortsätzen 6b sind jeweils zwei als längliche Aussparungen ausgebildete Führungsnuten 10 vorgesehen, in welche jeweils ein Bolzenabschnitt 11 eingreift. Jeder Bolzenabschnitt 11 ist Bestandteil der Spannschiene 7, und zwar befindet sich jeder Bolzenabschnitt 11 auf einem abermals plattenförmigen Fortsatz 7b, wobei die Spannschiene 7 zwei derartige, von dem eigentlichen Schienenabschnitt 7a abkragende Fortsätze 7b besitzt. Die beiden Fortsätze 7b stehen ebenfalls senkrecht zur Achsrichtung 9, ragen - vgl. Fig. 1b - zwischen die beiden plattenförmigen Fortsätze 6b hinein und werden durch diese geführt. Zusammen mit der Führung durch die Bolzenabschnitte 11 in Relation zu den Führungsnuten 10 ist somit die Spannschiene 7 gemäß Pfeilrichtung 12 - diese ist parallel zur Längsachse der Führungsnuten 10 - verschiebbar, jedoch gleichzeitig unverlierbar geführt bzw. gehalten. Dabei kann auch ein einziger Fortsatz 7b - und ggf. ein einziger Fortsatz 6b - ausreichend sein, ebenso kann lediglich eine einzige Führungsnut 10 mit zugeordnetem Bolzenabschnitt 11 ausreichen.

Die Montage des Kettentriebes nach den Fig. 1a, 1b kann somit wie folgt geschehen:
Auf ein nicht gezeigtes Hilfsgestell werden zunächst die beiden Abtriebsräder 3 sowie die Einheit aus Führungsschiene 6 und Spannschiene 7 aufgesetzt. Anschließend wird die Kette 5 eingefädelt, wonach in den den Abtriebsrädern 3 gegenüberliegenden Bereich das Antriebsritzel 4 eingelegt wird. Mittels einer Halteklammer 13, die zusätzlich einen Griff 14 aufweist, können dann die Führungsschiene 6 und die Spannschiene 7 in ihren unteren Abschnitten zusammengehalten werden, wobei diese Halteklammer 13 gleichzeitig eine Haltezunge 15 für das Antriebsritzel 4 aufweist. Diese komplette vormontierte Kettentrieb-Einheit kann nunmehr von einem Roboter ergriffen werden, und zwar an den beiden Abtriebsrädern 3 sowie an einer am Fortsatz 6b der Führungsschiene 6 vorgesehenen Aufnahme 16. Nun kann dieser Roboter die vormontierte Kettentrieb-Einheit in den Kettenschacht 2 der Brennkraftmaschine einsetzen und wie gewünscht positionieren. Anschließend werden die beiden Abtriebsräder 3 mit den jeweiligen Nockenwellen sowie das Antriebsritzel 4 mit der Kurbelwelle verschraubt. Ferner erfolgt eine Verschraubung der Führungsschiene 6 am Kurbelgehäuse 1, und zwar mittels zweier Schrauben 17, wobei sichergestellt sein kann, daß eine geringfügige Verschiebbarkeit der Führungsschiene 6 in Achsrichtung 9 gegeben ist. Danach kann der Kettenspanner 8 montiert und die Halteklammer 13 abgezogen werden. Darauf hingewiesen werden soll noch, daß der Montagevorgang nicht auf den beschriebenen Ablauf beschränkt sein muß, vielmehr ist es auch möglich, mittels des Griffs 14 der Halteklammer 13 die vormontierte Kettentrieb-Einheit quasi von unten her in das dann bevorzugt auf dem Kopf stehende Kurbelgehäuse bzw. in dessen Kettenschacht 2 einzuführen.

Es soll darauf hingewiesen werden, daß anstelle der Schrauben 17, die ohnehin lediglich eine schwimmende Lagerung der Führungsschiene 6 an der Brennkraftmaschine bewirken, auch geeignete Anlageflächen am Kurbelgehäuse 1 oder am nicht gezeigten Zylinderkopf vorgesehen sein können, an denen sich die Führungsschiene 6 abstützt. Tatsächlich wird nämlich die Führungsschiene 6 und somit auch die Spannschiene 7 durch die Kette 5 in Achsrichtung 9 geführt. Hierzu ist an der Führungsseite zumindest der Führungsschiene 6 eine die Kette 5 aufnehmende Rinne 21 ausgebildet. Wie Fig. 1a zeigt, kann eine derartige Rinne 21 zusätzlich auch an der Führungsseite der Spannschiene 7 vorgesehen sein. Somit ist eine optimale axiale Kettenführung gewährleistet, da sich die Kette 5 über die bezüglich der Brennkraftmaschine festen Kettenräder (Antriebsritzel 4 und Abtriebsräder 3) in ihre Betriebslage selbst einstellt und die Kettenführungsteile, nämlich die Führungsschiene 6 und die Spannschiene 7 diese Betriebslage durch ihre schwimmende Lagerung unterstützen.

Beim Ausführungsbeispiel nach den Fig. 2a bis 2c sind die gleichen Bauelemente mit den gleichen Bezugsziffern bezeichnet. Auch hier weisen sowohl die Führungsschiene 6 als auch die Spannschiene 7 jeweils einen eigentlichen Schienenabschnitt 6a bzw. 7a auf, ferner trägt die Führungsschiene 6 wieder zwei plattenförmige Fortsätze 6b, die den nunmehr einzigen - dafür gegenüber dem ersten Ausführungsbeispiel dickeren - Fortsatz 7b der Spannschiene zwischen sich aufnehmen. Dieser Fortsatz 7b trägt wieder zwei auf einer gemeinsamen Achse liegende Bolzenabschnitte 11, die in eine Führungsnut 10 im Fortsatz 6b der Führungsschiene eingreifen.

Jedoch ist bei diesem Ausführungsbeispiel - wie aus Fig. 2a besonders klar ersichtlich wird - lediglich eine einzige Führungsnut 10 beidseitig an der Führungsschiene 6 vorgesehen, welche darüber hinaus derart geformt ist, daß die Spannschiene 7 gegenüber der Führungsschiene 6 verschwenkt werden kann. Diese Schwenkbewegung erfolgt um einen Drehpunkt 18, in welchem die Spannschiene 7 als auch die Führungsschiene 6 gemeinsam auf einen ebenfalls mit 18 bezeichneten Stift am Kurbelgehäuse 1 aufgesteckt sind. Dies wird besonders klar aus Fig. 2c ersichtlich. Da diese Fixierung über die Stiftverbindung bzw. über den Drehpunkt 18 jedoch noch nicht ausreichend ist, ist die Führungsschiene 6 ferner in eine am Kurbelgehäuse 1 (oder auch am wie üblich oberhalb davon liegenden Zylinderkopf) vorgesehene Nase 19 eingehängt. Hierzu weist die Führungsschiene 6 einen entsprechend angepaßten Haken 20 auf. Dabei kann sowohl im Bereich dieses an der Nase 19 aufgehängten Hakens 20 als auch im Bereich der Stiftverbindung 18 wieder dafür Sorge getragen sein, daß eine geringfügige Verschiebarkeit in Achsrichtung 9 gewährleistet ist, wobei analog dem Ausführungsbeispiel nach den Fig. 1a, 1b die Kette 5 über die Rinne 21 die Führungsschiene 6 in Axialrichtung einstellt. Aus diesem Grunde kann anstelle der Nase 19 sowie des Hakens 20 auch eine geeignete Anlagefläche an der Brennkraftmaschine vorgesehen sein, an welcher sich die Führungsschiene 6 abstützt. Ferner ist als weitere Abweichung vom gezeigten Ausführungsbeispiel durchaus eine einziger Bolzenabschnitt 11 ausreichend, so daß in der Führungsschiene 6 auch nur an einer einzigen Seite eine Führungsnut 10 vorgesehen sein muß.

Die Montage dieser Kettentrieb-Einheit nach dem Ausführungsbeispiel gemäß Fig. 2a bis 2c kann im wesentlichen ebenso wie bei demjenigen gemäß den Fig. 1a, 1b erfolgen. Bei beiden Ausführungsbeispielen liegt somit eine leicht handhabbare vormontierbare Kettentrieb-Einheit vor, die auf einfache Weise in einem Kettenschacht 2 eines Brennkraftmaschinen-Kurbelgehäuses 1 montiert werden kann. Es werden so wenig Bauelemente als möglich benötigt, um eine einfach handhabbare Einheit zu schaffen, wobei gleichzeitig eine optimale Kettenführung gewährleistet ist. Sicher erfüllt werden diese Funktionsanforderungen u. a. auch dadurch, daß die Spannschiene 7 mit zumindest einem an deren eigentlichen Schienenabschnitt 7a angebundenen Fortsatz 7b zwischen zwei an den eigentlichen Schienenabschnitt 6a der Führungsschiene 6 angebundenen plattenförmigen Fortsätzen 6b geführt ist. Dabei kann sowohl die Führungsschiene 6 als auch die Spannschiene 7 ein relativ einfach herstellbares Kunststoff-Spritzgußteil sein, wobei aufgrund der Elastizität dieses Materials die beiden Fortsätze 6b der Führungsschiene 6 auch geringfügig aufgebogen werden können, um die Spannschiene 7 mit ihrem (ihren) Fortsatz (Fortsätzen) 7b und insbesondere den darauf vorgesehenen Bolzenabschnitten 11 einsetzen zu können, und zwar derart, daß die Bolzenabschnitte 11 in die Führungsnuten 10 eingreifen.

Ein weiterer aus der Verbindung von Führungsschiene 6 und Spannschiene 7 resultierender Vorteil liegt darin, daß nun beide Schienen, d. h. sowohl die Führungsschiene 6 als auch die Spannschiene 7 in ihren eigentlichen Schienenabschnitten 6a bzw. 7a einen konstanten Krümmungsverlauf aufweisen können. Aufgrund der gegenseitigen Zuordnung ist damit sichergestellt, daß die Kettenglieder der Kette 5 beim Durchlaufen dieser Schienen weder beschleunigt noch verzögert werden. Dieses Kriterium wäre hingegen nicht mit Sicherheit erfüllbar, wenn die beiden Schienen jeweils für sich separat am Kurbelgehäuse 1 befestigt werden würden. Da ferner - wie bereits erläutert - die Führungsschiene 6 und die Spannschiene 7 auch in Achsrichtung 9 geringfügig verschiebbar sind, werden die Kettenglieder der Kette 5 auch nicht geschränkt. Vielmehr werden sowohl Führungsschiene 6 als auch die Spannschiene 7 über die Rinnen 21 durch die Kette 5 in Achsrichtung 9 eingestellt. Insgesamt entsteht hierdurch in der Kette weniger Dynamik, was eine geringere Reibung, geringere Wärmeerzeugung und geringeren Verschleiß bedeutet. Somit ist nicht nur für die Schienen der erfindungsgemäßen Kettentrieb-Einheit, sondern auch für die Kette 5 selbst eine lange Lebensdauer bei Wartungsfreiheit durch gute Betriebsbedingungen sichergestellt. Insgesamt zeichnet sich somit eine erfindungsgemäße Kettentrieb-Einheit durch einfache Montierbarkeit, hohe Qualität und sichere Funktionserfüllung aus, wobei selbstverständlich eine Vielzahl von Details, insbesondere konstruktiver Art, durchaus abweichend von den gezeigten Ausführungsbeispielen gestaltet sein können, ohne den Inhalt der Patentansprüche zu verlassen. So können insbesondere bei Brennkraftmaschinen der V-Bauart auch zwei derartige Kettentriebseinheiten vorgesehen sein.

## Patentansprüche

1. Kettentrieb-Einheit für den Nockenwellen-Antrieb einer Brennkraftmaschine mit einem Antriebsritzel (4), einer Kette (5), zumindest einem Abtriebsrad (3), sowie einer Führungsschiene (6) und einer Spannschiene (7), die als vormontierte Einheit in einen Kettenschacht (2) des Brennkraftmaschinen-Kurbelgehäuses (1) einsetzbar ist,
dadurch gekennzeichnet, daß die Spannschiene (7) und die Führungsschiene (6) relativ zueinander bewegbar ineinander geführt sind.

2. Kettentrieb-Einheit nach Anspruch 1,
dadurch gekennzeichnet, daß die Führungsschiene (6) in Achsrichtung (9) von Antriebsritzel (4) und Antriebsrad (3) geringfügig verschiebbar an der Brennkraftmaschine (Kurbelgehäuse 1) festgelegt ist.

3. Kettentrieb-Einheit nach Anspruch 1 oder 2,
dadurch gekennzeichnet, daß die Führungsschiene (6) in eine Nase (19) am Kurbelgehäuse (1) oder Brennkraftmaschinen-Zylinderkopf unter geringfügiger Verschiebbarkeit in Achsrichtung (9) von Antriebsritzel (4) oder Abtriebsrad (3) einhängbar oder an zumindest einer geeigneten Anlagefläche der Brennkraftmaschine abstützbar ist.

4. Kettentrieb-Einheit nach einem der vorangegangenen Ansprüche,
dadurch gekennzeichnet, daß die Spannschiene (7) mit der Führungsschiene (6) über zumindest einen in eine Führungsnut (10) eingreifenden Bolzenabschnitt (11) verbunden ist.

5. Kettentrieb-Einheit nach einem der vorangegangenen Ansprüche,
dadurch gekennzeichnet, daß die Spannschiene (7) und die Führungsschiene (6) gegeneinander verdrehbar über eine gemeinsame Stiftverbindung (18) an der Brennkraftmaschine (Kurbelgehäuse 1) festgelegt sind.

6. Kettentrieb-Einheit nach einem der vorangegangenen Ansprüche,
dadurch gekennzeichnet, daß die Spannschiene (7) mit der Führungsschiene (6) über zumindest zwei in verschiedenen Ebenen liegende, jeweils in eine Führungsnut (10) eingreifende Bolzenabschnitte (11) verbunden ist.

7. Kettentrieb-Einheit nach einem der vorangegangenen Ansprüche,
dadurch gekennzeichnet, daß die Spannschiene (7) mit der Führungsschiene (6) während der Montage über eine Halteklammer (13) verbunden ist.

8. Kettentrieb-Einheit nach einem der vorangegangenen Ansprüche,
dadurch gekennzeichnet, daß die Spannschiene (7) mit zumindest einem an den eigentlichen Schienenabschnitt (7a) angebunden Fortsatz (7b) durch zumindest einen an den eigentlichen Schienenabschnitt (6a) der Führungsschiene (6) angebundenen plattenförmigen Fortsatz (6b) geführt ist.

9. Kettentrieb-Einheit nach einem der vorangegangenen Ansprüche,
dadurch gekennzeichnet, daß die Führungsschiene (6) und die Spannschiene (7) einen konstanten Krümmungsverlauf aufweisen.

10. Kettentrieb-Einheit nach einem der vorangegangenen Ansprüche,
dadurch gekennzeichnet, daß die Führungsschiene (6) und/oder die Spannschiene (7) eine Rinne (21) zur Aufnahme der Kette (5) aufweisen und in Achsrichtung (9) von Abtriebsrad (3) und Antriebsritzel (4) schwimmend an der Brennkraftmaschine gelagert sind.

## Claims

1. A chain drive unit for driving the camshaft of an internal combustion engine, with a drive sprocket (4), a chain (5), at least one take-off wheel (3), and a guide rail (6) and a tensioning rail (7), which can be inserted as a pre-assembled unit into a chain channel (2) of the internal combustion engine crankcase (1),
characterised in that the tensioning rail (7) and the guide rail (6) are assembled within each other in a movable manner relative to each other.

2. A chain drive unit according to Claim 1,
characterised in that the guide rail (6) is fastened onto the internal combustion engine (crankcase 1) so that it can be moved very slightly in the axial direction (9) of the drive sprocket (4) and the take-off wheel (3).

3. A chain drive according to Claim 1 or Claim 2,
characterised in that the guide rail (6) can be hung into a nose (19) on the crankcase (1) or the internal combustion engine cylinder head giving a very slight capability of movement in the axial direction (9) of the drive sprocket (4) or the take-off wheel (3), or can be supported on at least one suitable abutment face of the internal combustion engine.

4. A chain drive according to one of the foregoing Claims,
characterised in that the tensioning rail (7) is joined to the guide rail (6) via at least one bolt section (11) engaging in a guide slot (10).

5. A chain drive according to one of the foregoing Claims,
characterised in that the tensioning rail (7) and the guide rail (6) can be fastened so as to pivot with respect to each other via a common stud connection (18) on the internal combustion engine (crankcase 1).

6. A chain drive according to one of the foregoing Claims,
characterised in that the tensioning rail (7) is joined to the guide rail (6) via at least two bolt sections (11) lying in different planes, each engaging in a guide slot (10).

7. A chain drive according to one of the foregoing Claims,
characterised in that the tensioning rail (7) is joined to the guide rail (6) during assembly via a holding clamp (13).

8. A chain drive according to one of the foregoing Claims,
characterised in that at least one extension (7b) bound onto its own rail section (7a) of the tensioning rail (7) is taken between at least one plate-shaped extension (6b) bound onto the actual rail section (6a) of the guide rail (6).

9. A chain drive according to one of the foregoing Claims,
characterised in that the guide rail (6) and the tensioning rail (7) have a constant curvature.

10. A chain drive according to one of the foregoing Claims,
characterised in that the guide rail (6) and/or the tensioning rail (7) have a channel (21) to accept the chain (5) and are mounted on the internal combustion engine floating in the axial direction (9) of the drive sprocket (4) and the take-off wheel (3).

## Revendications

1. Dispositif d'entraînement à chaîne pour l'entraînement des arbres à cames d'un moteur à combustion interne comprenant un pignon d'entraînement (4), une chaîne (5), au moins un pignon de sortie (3) et un rail de guidage (6) ainsi qu'un rail tendeur (7), utilisés comme dispositifs préassemblés dans une cavité à chaîne (2) d'un carter de vilebrequin (1) d'un moteur à combustion interne,
caractérisé en ce que
le rail tendeur (7) et le rail de guidage (6) sont guidés l'un par rapport à l'autre de façon à pouvoir se déplacer l'un dans l'autre.

2. Dispositif d'entraînement à chaîne selon la revendication 1,
caractérisé en ce que
le rail de guidage (6) est fixé sur le moteur à combustion interne (carter de vilebrequin (1)) avec un léger coulissement dans la direction axiale (9) du pignon d'entraînement (4) et du pignon de sortie (3).

3. Dispositif selon l'une des revendications 1 ou 2,
caractérisé en ce que
le rail de guidage (6) s'accroche dans un bec (19) du carter de vilebrequin (1) ou de la culasse du moteur à combustion interne, avec une légère possibilité de coulissement dans la direction axiale (9) du pignon d'entraînement (4) ou du pignon de sortie (3), et s'appuie au moins sur une surface d'appui appropriée du moteur à combustion interne.

4. Dispositif selon l'une des revendications précédentes,
caractérisé en ce que
le rail tendeur (7) est relié au rail de guidage (6) par au moins un segment de goujon (11) pénétrant dans une rainure de guidage (10).

5. Dispositif selon l'une des revendications précédentes,
caractérisé en ce que
le rail tendeur (7) et le rail de guidage (6) peuvent tourner l'un par rapport à l'autre grâce à une liaison à broche (18) commune prévue sur le moteur à combustion interne (carter de vilebrequin (1).

6. Dispositif selon l'une des revendications précédentes,
caractérisé en ce que
le rail tendeur (7) est relié au rail de guidage (6) par au moins deux segments de goujon (11) pénétrant chaque fois dans une rainure de guidage (10) située dans des plans différents.

7. Dispositif selon l'une des revendications précédentes,
caractérisé en ce que
le rail tendeur (7) est relié au rail de guidage (6) au cours du montage par l'intermédiaire d'une pince de fixation (13).

8. Dispositif selon l'une des revendications précédentes,
caractérisé en ce que
le rail tendeur (7) est guidé avec au moins un prolongement (7b) solidaire du segment de rail (7a) proprement dit, par au moins un prolongement (6b) en forme de plaque, porté par le segment de rail (6a) proprement dit du rail de guidage (6).

9. Dispositif selon l'une des revendications précédentes,
caractérisé en ce que
le rail de guidage (6) et le rail tendeur (7) ont une courbure constante.

10. Dispositif selon l'une des revendications précédentes,
caractérisé en ce que
le rail de guidage (6) et/ou le rail tendeur (7) ont une goulotte (21) pour recevoir la chaîne (5) et sont montés de manière flottante sur le moteur à combustion interne, dans la direction axiale (9) du pignon de sortie (3) et du pignon d'entraînement (4).
